# EUROPEAN PATENT SPECIFICATION

(11) **EP 1 167 792 B1**
(45) Date of publication and mention of the grant of the patent: **31.01.2007**
(21) Application number: 01112658.8
(22) Date of filing: 25.05.2001
(51) Int. Cl.: F16C 33/78

(54) **Sealing means for a rolling contact bearing**
Dichtungssystem für ein Wälzlager
Dispositif d'étanchéité pour un palier à contact de roulement

(30) Priority: 30.06.2000 IT TO000651
(43) Date of publication of application: 02.01.2002
(73) Proprietor: SKF INDUSTRIE S.p.A., 10121 Torino (IT)
(72) Inventor: Laurenti, Vincenzo, 10041 Carignano (TO) (IT); Avaro, Fabrizio, 10060 Osasco (TO) (IT)
(74) Representative: Lotti, Giorgio

(56) References cited:
- EP-A- 0 976 939
- DE-A- 1 801 894
- US-A- 5 037 213

## Description

The present invention relates to a rolling contact bearing.

In general, rolling contact bearings of a well-known type comprise an inner race which revolves around a rotation axis, a fixed outer race which is coaxial to the inner race, a number of revolving elements which are interposed between the two races, and, for each side of the rolling contact bearing, a sealing element which is integrally mounted to the fixed race and which extends in contact with the revolving race to close the gap between the two races in such a way as to stop solid impurities and dampness entering inside the rolling contact bearing.

Each rolling contact bearing presents individual peculiarities depending on its own conformation, which render the rolling contact bearing itself more or less suitable for a specific application, and although the choice of rolling contact bearing is always made in such as way as to optimise its suitability to the highest possible level, it is always possible that, due to errors relating to assembly, thermal expansion or other factors, problems can arise in terms of alignment, whether axial, radial or between the two races, with a consequent loss of contact between the sealing elements and the revolving race and the result that the sealing capacity itself diminishes.

An example of these rolling contact bearings is disclosed in the US Patent Nr. US-A-5,037,213, in which the inner race of the rolling contact bearing is provided with a radial slide groove and the sealing element comprises a rigid insert and three lips two of them being are arranged in sliding contact with the inner race in order to realize a gap in the radial slide groove.

The rolling contact bearing disclosed in the US Patent Nr. US-A-5,037,213 has got a sealing action due both to the friction of two lips against relevant surfaces of the inner race and due to the gap, that is a labyrinth, which is defined by a third lip and by the radial slide groove carved in the inner race. In other words, US Patent Nr. US-A-5, 037, 213 discloses a rolling contact bearings whose sealing affects also the geometric characteristics of the rolling contact bearing itself and therefore is nor cheap neither simple to be produced.

The aim of the present invention is to produce a rolling contact bearing which permits the simple and economical resolution of the disadvantages described above.

According to the present invention, a rolling contact bearing presenting the characteristics as set forth in claim 1 is provided.

The invention will now be described with reference to the attached drawings which show an axial section, with some parts removed for reasons of clarity, of a preferred form of embodiment.

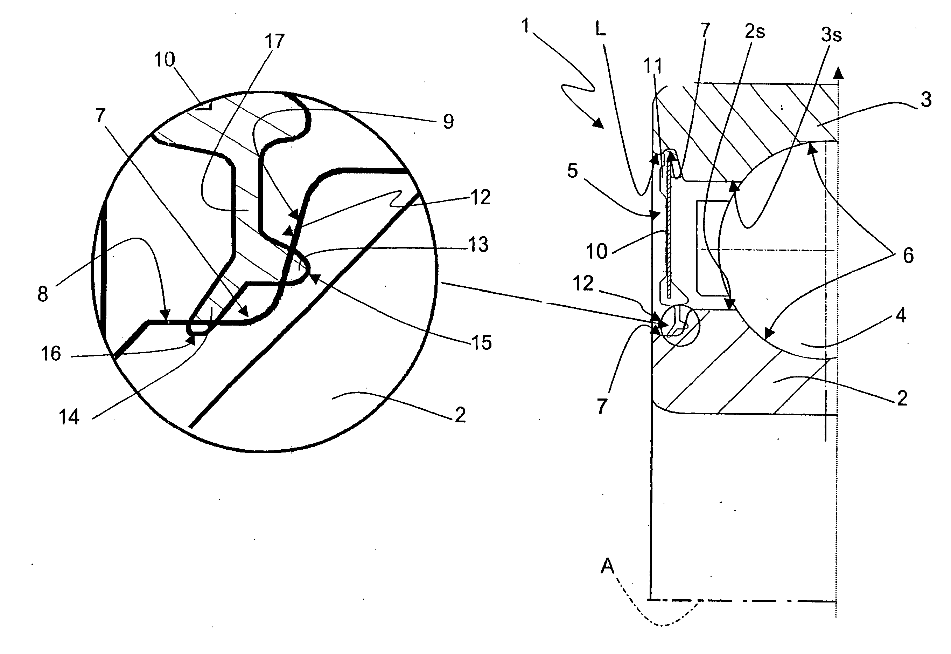

With reference to FIGURE 1, the number 1 refers to a rolling contact bearing in its entirety.

The rolling contact bearing 1 comprises: an inner revolving race 2 which turns around a rotation axis A; a fixed outer race 3 which is coaxial to the inner race 2 and which is radially and internally delimited by a cylindrical surface 3s; and a number of spheres 4 which are interposed between the two races 2 and 3.

The rolling contact bearing 1 also comprises two sealing elements 5 (only one of which is illustrated), which are mounted integral to the race 3 on the two sides of the rolling contact bearing 1, and which extend in contact with a larger cylindrical surface 2s of the race 2 in order to close the gap L between the two races 2 and 3 in such a way as to stop solid impurities and dampness entering inside the rolling contact bearing 1.

The surfaces 2s and 3s are both provided with respective central sliding tracks for the spheres 4, and they present, for each element 5, respective lateral annular housings 7 for housing the element 5 itself. In particular, each housing 7 of the race 2 is radially delimited by a cylindrical annular surface 8 which is coaxial to the axis A, and is axially delimited towards the inside of the rolling bearing 1 by a frusto-conical surface 9 which is orientated with the respective vertex turned towards the outside of the rolling bearing 1, and is jointed to the relative surface 8.

Each sealing element 5 comprises a flattened annular rigid insert 10 which is arranged on a plane transverse to the axis A, and flexible support which extends along a respective free end of the insert 10 and which is arranged inside the relative annular housing 7 of the race 3 is such a way as to render the relative element 5 integral to the race 3 itself.

Each element 5 also comprises a sealing lip 12, which extends radially towards the axis A from a respective free end of the insert 10, and is provided with two section 13 and 14 which are divergent from each other and which present respective ends 15 and 16 which are arranged in contact with the surfaces 9 and 8 respectively. In particular, the section 13 extends inside the rolling contact bearing 1 in a direction which is substantially parallel to the axis A and towards the surface 9, and the relative end 15 presents a substantially rounded shape, while the section 14 extends substantially outside the rolling contact bearing 1 in a direction which is substantially incident to the axis A and towards the surface 8.

Each element 5 also comprises an annular membrane 17, which joints the rigid insert 10 and the sealing lip 12 in relation to each other, and it is made of elastically yieldable material in order to permit any oscillating movement whatsoever of the two sections 13 and 14 with regard to the insert 10.

When in use, the rolling contact bearing 1 is assembled in such a way that the two sections 13 and 14 are arranged with the relative ends 15 and 16 in direct contact with the surfaces 9 and 8 respectively, on which they exert a determined pressure.

An axial movement of the race 2 in relation to the race 3 which involves a movement of the surface 9 towards the outside of the rolling contact bearing 1 causes the surface 9 to push against the section 13, which is opposed by the flexible deformation of the membrane 17 which causes an increase in the reciprocal pressure between the surface 9 and the end 15. Al the same time, such an axial movement also causes the surface 14 to life and consequently become detached from the surface 9, but the consequent loss of sealing capacity is compensated for by the above-mentioned increase in pressure between the surface 9 and the end 15.

Similarly, an axial movement of the race 2 in relation to the race 3 which involves an axial movement of the surface 9 towards the inside of the rolling contact bearing 1 causes a reduction in the push of the surface 9 against the end 15, and such a reduction is opposed by the flexible deformation of the membrane 17 which causes an increase in the reciprocal pressure between the surface 8 and the end 16.

So any loss of sealing capacity between the surface 9 and the end 15 is compensated for by the increase in pressure between the surface 9 and the end 15 themselves.

## Claims

1. Rolling contact bearing (1) comprising:
- a fixed outer race (3) coaxial to a rotation axis (A) of the rolling contact bearing itself,
- a revolving inner race (2) turning around the axis (A) and presenting a larger cylindrical surface (2s) facing the outer race (3);
- two annular lateral housings (7) made in the cylindrical surface (2s), each housing (7) being radially delimited by a cylindrical annular surface coaxial to the axis (A), and being axially delimited towards the inside of the rolling bearing (1) by a frusto-conical surface (9) orientated with the respective vertex turned towards the outside of the rolling bearing (1);
- a number of revolving elements (4) interposed between the two races (2, 3); and
- at least one sealing element (5) which is integrally mounted to the fixed race (3), and which extends in contact with the larger cylindrical surface (2s) to close the gap (L) between the two races (2, 3) in such a way as to stop any solid impurities or dampness from entering inside the rolling contact bearing (1); the sealing element (5) comprising a rigid insert (10) and a sealing lip (12) which extends radially towards the axis (A) of the rigid insert (10), and which in turn comprises:
- a first section (13) which extends inside the rolling contact bearing (1) in a direction substantially parallel to the said axis (A) and which is arranged in contact with the frusto-conical surface (9); and
- a second section (14) which extends substantially outside the rolling contact bearing (1) in a direction divergent from the first section (14) and substantially incident to the axis (A), and which is arranged in contact with the cylindrical annular surface (8);
the rolling contact bearing (1) being **characterised by** the fact that the cylindrical annular surface (8) and the frusto-conical surface (9) are sealing surfaces and are jointed to each other in order to compensate any loss of sealing capacity due to any axial movement of the races (2, 3) in relation to each other and by the fact that the sealing lip (12) comprises an annular membrane (17) which is interposed between the said rigid insert (10) and the two divergent sections (13, 14), and which is elastically yieldable in order to permit any oscillating movement whatsoever of the first and the second sections (13, 14) in relation to the rigid insert (10).

2. Rolling contact bearing according to Claim 1, **characterised by** the fact that the said fixed race (3) presents a respective internal cylindrical surface (3s) which is provided with an annular housing (7) for housing the said sealing element (5), which is in its turn provided with a flexible support (11) arranged at a free end of the rigid insert (10) opposite the said sealing lip (12), and inserted inside the said annular housing (7).

3. Rolling contact bearing according to Claim 1, **characterised by** the fact that the said rigid insert (10) presents a flattened annular shape and lies on a plane which is transverse to the rotation axis (A).

## Patentansprüche

1. Wälzlager (1), umfassend:
- einen festen äußeren Laufring (3), der koaxial zu einer Drehachse (A) des Wälzlagers selbst ist;
- einen umlaufenden inneren Laufring (2), der sich um die Achse (A) dreht und eine größere zylindrische Fläche (2s) aufweist, die dem äußeren Laufring (3) zugekehrt ist;
- zwei ringförmige, seitliche Gehäuse (7), die in der zylindrischen Fläche (2s) hergestellt sind, wobei jedes Gehäuse (7) radial durch eine zylindrische, ringförmige Fläche (8), die koaxial zu der Achse (A) ist, begrenzt ist und axial zum Inneren des Wälzlagers (1) hin durch eine kegelstumpfförmige Fläche (9), die mit dem jeweiligen Scheitel zur Außenseite des Wälzlagers (1) hin gedreht ausgerichtet ist, begrenzt ist;
- eine Anzahl umlaufender Elemente (4), die zwischen den zwei Laufringen (2, 3) angeordnet sind; und
- zumindest ein Dichtungselement (5), das einstückig an dem starren Laufring (3) angebracht ist und sich in Berührung mit der größeren zylindrischen Fläche (2s) zum derartigen Schließen des Spalts (L) zwischen den zwei Laufringen (2, 3) erstreckt, dass keinerlei feste Fremdstoffe oder Feuchtigkeit in das Innere des Wälzlagers (1) eindringen können; wobei das Dichtungselement (5) einen starren Einsatz (10) und eine Dichtlippe (12) umfasst, der sich radial zur Achse (A) des starren Einsatzes (10) hin erstreckt und seinerseits folgendes umfasst:
- einen ersten Abschnitt (13), der sich innerhalb des Wälzlagers (1) in eine Richtung erstreckt, die im Wesentlichen parallel zu der Achse (A) verläuft und in Berührung mit der kegelstumpfförmigen Fläche (9) angeordnet ist; und
- einen zweiten Abschnitt (14), der sich im Wesentlichen außerhalb des Wälzlagers (1) in einer Richtung erstreckt, die von dem ersten Abschnitt (14) abweicht und im Wesentlichen zur Achse (A) einfällt, und der in Berührung mit der zylindrischen, ringförmigen Fläche (8) angeordnet ist;
wobei das Wälzlager (1) **dadurch gekennzeichnet ist, dass** die zylindrische, ringförmige Fläche (8) und die kegelstumpfförmige Fläche (9) Dichtungsflächen sind und miteinander verbunden sind, um jeglichen Dichtungskapazitätsverlust aufgrund jeglicher axialer Verschiebung der Laufringe (2, 3) in Bezug zueinander auszugleichen, und **dadurch**, dass die Dichtlippe (12) eine ringförmige Membran (17) umfasst, die zwischen dem starren Einsatz (10) und den zwei abweichenden Abschnitten (13, 14) angeordnet ist und elastisch nachgiebig ist, um jegliche schwingende Bewegung des ersten und des zweiten Abschnitts (13, 14) bezüglich des starren Einsatzes (10) zuzulassen.

2. Wälzlager nach Anspruch 1, **dadurch gekennzeichnet, dass** der feste Laufring (3) eine entsprechende innere zylindrische Fläche (3s) aufweist, die mit einem ringförmigen Gehäuse (7) zum Aufnehmen des Dichtungselements (5) aufweist, das seinerseits mit einer flexiblen Halterung (11) versehen ist, welche an einem freien Ende des starren Einsatzes (10) der Dichtlippe (12) gegenüberliegend angeordnet und in das ringförmige Gehäuse (7) eingefügt ist.

3. Wälzlager nach Anspruch 1, **dadurch gekennzeichnet, dass** der starre Einsatz (10) eine abgeflachte, ringförmige Form aufweist und auf einer Ebene liegt, die quer zur Drehachse (A) verläuft.

## Revendications

1. Palier de contact à roulement (1) comprenant:
- une bague extérieure fixe (3) coaxiale à un axe de rotation (A) du palier de contact à roulement lui-même;
- une bague intérieure rotative (2) tournant autour de l'axe (A) et présentant une surface cylindrique plus grande (2s) tournée vers la bague externe (3);
- deux logements latéraux annulaires (7) formés dans la surface cylindrique (2s), chaque logement (7) étant délimité radialement par une surface annulaire cylindrique (8) coaxiale à l'axe (A), et étant délimité axialement en direction de l'intérieur du palier à roulement (1) par une surface tronconique (9) orientée de façon que le sommet respectif soit tourné en direction de l'extérieur du palier à roulement (1) ;
un certain nombre d'éléments rotatifs (4) interposés entre les deux bagues (2, 3) ; et
au moins un élément d'étanchéité (5) qui est monté d'une pièce avec la bague fixe (3) et qui s'étend en contact avec la surface cylindrique plus grande (2s) pour fermer l'espace (L) délimité entre les deux bagues (2, 3), de façon à empêcher une quelconque impureté solide ou humidité de pénétrer à l'intérieur du palier de contact à roulement (1); l'élément d'étanchéité (5) comprenant un insert rigide (10) et une lèvre d'étanchéité (12) qui s'étend radialement en direction de l'axe (A) de l'insert rigide (10), et qui comprend à son tour :
une première section (13) qui s'étend à l'intérieur du palier de contact à roulement (1) dans une direction sensiblement parallèle audit axe (A), et qui est agencée en contact avec la surface tronconique (9) ; et
une deuxième section (14) qui s'étend sensiblement à l'extérieur du palier de contact à roulement (1) dans une direction divergente de la première section (14) et sensiblement incidente à l'axe (A), et qui est agencée en contact avec la surface annulaire cylindrique (8) ;
le palier de contact à roulement (1) étant **caractérisé par le fait que** la surface annulaire cylindrique (8) et la surface tronconique (9) sont des surfaces d'étanchéité et sont jointoyées l'une à l'autre afin de compenser une quelconque perte de capacité d'étanchéité due à un quelconque déplacement axial des bagues (2, 3) l'une par rapport à l'autre, et **par le fait que** la lèvre d'étanchéité (12) comprend une membrane annulaire (17) qui est interposée entre ledit raccord rigide (10) et les deux sections divergentes (13, 14), et qui peut être se déformer élastiquement afin de permettre un quelconque déplacement d'oscillation de la première et de la deuxième sections (13, 14) par rapport à l'insert rigide (10).

2. Palier de contact à roulement selon la revendication 1, **caractérisé par le fait que** ladite bague fixe (3) présente une surface cylindrique interne respective (3s) qui est munie d'un logement annulaire (7) destiné à loger ledit élément d'étanchéité (5), qui est à son tour muni d'un support flexible (11) agencé au niveau d'une extrémité libre de l'insert rigide (10) en regard de ladite lèvre d'étanchéité (12), et inséré à l'intérieur dudit logement annulaire (7).

3. Palier de contact à roulement selon la revendication 1, **caractérisé par le fait que** ledit raccord rigide (10) présente une forme annulaire aplatie, et s'étend dans un plan qui est transversal à l'axe de rotation (A).
